# EUROPÄISCHE PATENTSCHRIFT

(11) **EP 3 815 942 B1**
(45) Veröffentlichungstag und Bekanntmachung des Hinweises auf die Patenterteilung: **13.07.2022**
(21) Anmeldenummer: 20204969.8
(22) Anmeldetag: 30.10.2020
(51) Int. Cl.: B60H 1/34, F24F 13/14

(54) **LUFTAUSSTRÖMERANORDNUNG**
AIR OUTLET ARRANGEMENT
AGENCEMENT D'ÉCHAPPEMENT D'AIR

(30) Priorität: 30.10.2019 DE 102019216772
(43) Veröffentlichungstag der Anmeldung: 05.05.2021
(73) Patentinhaber: VOLKSWAGEN AKTIENGESELLSCHAFT, 38440 Wolfsburg (DE)
(72) Erfinder: Zimmer, Steffen, 38102 Braunschweig (DE); Lange, Tomasz, 38550 Isenbüttel (DE); Harders, Richard, 38448 Wolfsburg (DE)
(74) Vertreter: Clarenbach, Carl-Philipp

(56) Entgegenhaltungen:
- EP-A1- 1 724 136
- WO-A1-98/23459
- DE-A1-102015 217 230
- DE-U1- 29 913 436

## Beschreibung

Die Erfindung betrifft eine Luftausströmeranordnung, insbesondere für ein Kraftfahrzeug, mit einem Luftausströmer, der ein einen Luftkanal aufweisendes Gehäuse und mindestens eine dem Luftkanal zugeordnete Luftleitlamelle mit einer Abströmkante und einer Anströmkante aufweist, wobei die Luftleitlamelle mit ihrer Anströmkante um eine der Abströmkante zugeordnete Drehachse verschwenkbar gelagert ist, und mit einer Dekoreinrichtung, die mindestens eine feststehende Dekorlamelle mit einer sich in Verlängerung der Abströmkante der Luftleitlamelle erstreckenden Sichtkante aufweist, wobei die Luftleitlamelle durch einen Drehbolzen an der Dekorlamelle um die Drehachse verschwenkbar gelagert ist.

Luftausströmeranordnungen der oben genannten Art sind aus dem Stand der Technik bekannt. So offenbart beispielsweise die Offenlegungsschrift DE 10 2015 217 230 A1 eine gattungsgemäße Luftausströmeranordnung. Die schwenkbare Lagerung der Luftleitlamelle wird dabei dadurch realisiert, dass sie an einem Ende mit einem Drehbolzen in eine zylinderförmige Aufnahme der Dekorlamelle eingesteckt ist, und mit ihrem anderen Ende radial in eine Rastaufnahme eingesteckt ist. Dabei erfolgt das radiale Einstecken in Richtung des Luftkanals beziehungsweise des Gehäuses des Luftausströmers. Zur Montage der Luftleitlamelle muss sie somit einerseits in Längserstreckung mit dem einen Drehbolzen in die Axialaufnahme eingeführt werden, und mit dem anderen Ende radial eingesteckt werden.

Aus der Offenlegungsschrift DE 10 2017 203 740 A1 ist eine weitere Luftausströmeranordnung bekannt, bei welcher eine verschwenkbare Luftleitlamelle abströmseitig verschwenkbar an einer fest an dem Gehäuse angeordneten Dekorlamelle gelagert ist. Auch die Offenlegungsschrift EP 2 962 879 A1 offenbart eine Luftausströmeranordnung mit einer verschwenkbaren Luftleitlamelle und einer sich daran anschließenden feststehenden Dekorlamelle.

Ähnliche Luftausströmeranordnungen gehen auch aus der Gebrauchsmusterschrift DE 299 13 436 U1 sowie den Offenlegungsschriften DE 10 2015 217 230 A1, EP 1 724 136 A1 und WO 98/23459 A1 hervor.

Der Erfindung liegt die Aufgabe zugrunde, eine verbesserte Luftausströmeranordnung zu schaffen, durch welche einerseits die Montage der Luftausströmeranordnung vereinfacht und andererseits mit kostengünstigen Mitteln die Robustheit der Luftausströmeranordnung weiter verbessert wird.

Die der Erfindung zugrundeliegende Aufgabe wird durch eine Luftausströmeranordnung mit den Merkmalen des Anspruchs 1 gelöst. Diese hat den Vorteil, dass die Luftleitlamelle ohne großen Kraftaufwand montierbar ist, und dass die Luftleitlamelle nach der Montage unverlierbar an dem Gehäuse gehalten und leicht drehbar gelagert ist. Erfindungsgemäß wird dies dadurch erreicht, dass die Dekorlamelle eine radial offene Lageraufnahme für den Drehbolzen aufweist, und dass das Gehäuse einen Lagervorsprung aufweist, der im montierten Zustand der Dekorlamelle an dem Gehäuse in die Lageraufnahme hinein ragt um zusammen mit der Lageraufnahme ein Radiallager für den Drehbolzen zu bilden. Bei der Montage wird somit die Luftleitlamelle zunächst mit dem Drehbolzen radial in die Lageraufnahme der Dekorlamelle eingeführt und anschließend das Gehäuse entweder von hinten auf die Dekorlamelle aufgesteckt, oder die Dekorlamelle zusammen mit dem Drehbolzen auf das Gehäuse. Das Gehäuse und die Dekorlamelle sind dabei bevorzugt derart ausgebildet, dass diese nur derart miteinander verbindbar sind, dass der Lagervorsprung in die Lageraufnahme radial hineinragt beziehungsweise eingreift. Bevorzugt weisen dazu die Dekorlamelle und/oder das Gehäuse Führungsmittel auf, welche das korrekte Zusammenführen der Einzelteile, insbesondere das Zuführen des Lagervorsprungs in die Lageraufnahme beim Zusammensetzen von Dekorlamelle und Gehäuse gewährleisten.

Gemäß einer bevorzugten Weiterbildung der Erfindung ist der Lagervorsprung derart ausgebildet, dass der Drehbolzen in dem Radiallager radial spielfrei oder zumindest im Wesentlichen radial spielfrei gehalten ist. Durch die radial spielfreie oder nahezu spielfreie Lagerung ist gewährleistet, dass beim Verschwenken der Luftleitlamelle Klappergeräusche vermieden und eine hohe Anmutung der Mechanik gewährleistet werden. Dabei ist die Lagerung bevorzugt derart ausgebildet, dass sich der Drehbolzen in der durch Lagervorsprung und Lageraufnahme gebildeten Lagerung reibungsarm drehen lässt, um ein einfaches Schwenken der Luftleitlamelle zu ermöglichen.

Besonders bevorzugt ist der Drehbolzen fest an der Luftleitlamelle angeordnet, sodass sich der Drehbolzen mit der Luftleitlamelle mitbewegt. Dadurch ergibt sich, dass in der Lagerung eine Relativbewegung zwischen Drehbolzen und Lagervorsprung sowie Lageraufnahme ermöglicht sein muss, um die Drehbewegung beziehungsweise das Verschwenken der Luftleitlamelle zu gewährleisten. Gemäß einer alternativen Ausführungsform ist vorgesehen, dass der Drehbolzen fest zwischen dem Lagervorsprung und der Lageraufnahme gehalten, und in der Luftleitlamelle drehbar gelagert ist. In diesem Fall ist dann die Relativbewegung bei einem Verschwenken der Luftleitlamelle zwischen der Luftleitlamelle und dem Drehbolzen verortet. Dies vereinfacht die Konstruktion der Lagerung, weil Fertigung- und Montagetoleranzen größer ausfallen können, wenn der Drehbolzen in der Lagerung durch den Lagervorsprung gegen die Lageraufnahme verspannt werden kann.

Gemäß einer bevorzugten Ausführungsform der Erfindung ist der Drehbolzen einstückig mit der Luftleitlamelle ausgebildet. Dies ergibt eine kostengünstige Realisierung der Luftleitlamelle und der Luftausströmeranordnung insgesamt. Darüber hinaus wird die Montage vereinfacht. In diesem Fall ist dann selbstverständlich die Relativbewegung beim Verschwenken der Luftleitlamelle in dem Radiallager verortet, sodass eine zumindest im Wesentlichen spielfreie Lagerung des Drehbolzens in der Lagerung bevorzugt ist.

Weiterhin ist bevorzugt vorgesehen, dass der Lagervorsprung eine gekrümmte Anlagefläche zur Drehlagerung des Drehbolzens aufweist. Der Lagervorsprung weist dazu an seinem freien Ende insbesondere eine konkave Vertiefung auf, die zur bereichsweisen Aufnahme des Drehbolzens in der Lageraufnahme dient.

Wie oben bereits erwähnt, ist gemäß einer alternativen Ausführungsform der Erfindung der Drehbolzen bevorzugt in oder an der Luftleitlamelle gelagert, sodass auf eine drehbare Lagerung in der Lageraufnahme verzichtet werden kann.

Gemäß einer bevorzugten Weiterbildung der Erfindung ist auf dem von der Dekorlamelle abgewandten Ende der Luftleitlamelle eine weitere Dekorlamelle an dem Gehäuse in Längserstreckung der Luftleitlamelle angeordnet. Damit ist die Luftleitlamelle zwischen zwei Dekorlamellen angeordnet, wodurch sich insbesondere das Erscheinungsbild einer durchgehenden Lamelle, die durch Dekorlamelle, Luftleitlamelle und weitere Dekorlamelle gebildet wird, ergibt.

Bevorzugt weist die Luftleitlamelle an ihrem der weiteren Dekorlamelle zugeordneten Ende einen weiteren Drehbolzen auf, der insbesondere wie der oben beschriebene Drehbolzen ausgebildet und gelagert ist. Dadurch ist eine einfache verschwenkbare Lagerung der Luftleitlamelle an der weiteren Dekorlamelle ebenfalls gewährleistet. Bevorzugt weist die Luftleitlamelle somit beide Drehbolzen auf, wodurch sich eine einfache Montage der Luftleitlamelle an den Dekorlamellen ergibt.

Insbesondere weist dabei die weitere Dekorlamelle eine weitere radial offene Lageraufnahme für den weiteren Drehbolzen auf, und das Gehäuse einen weiteren Lagervorsprung, der im montierten Zustand der weiteren Dekorlamelle an dem Gehäuse in die weitere radial offene Lageraufnahme hinein ragt und zusammen mit der weiteren radial offenen Lageraufnahme ein weiteres Radiallager, insbesondere Drehlager, für den weiteren Drehbolzen bildet. Die Luftausströmeranordnung zeichnet sich somit insbesondere dadurch aus, dass die Luftleitlamelle mit den beiden Dekorlamellen auf die gleiche Art und Weise verbunden wird. Dadurch ergibt sich eine einfache Montagereihenfolge sowie eine sichere verschwenkbare Lagerung der Luftleitlamelle an den Dekorlamellen. Alternativ weist das Gehäuse oder die weitere Dekorlamelle für den weiteren Drehbolzen eine zylinderförmige Vertiefung oder Aussparung zur Aufnahme des weiteren Drehbolzens auf. Im Unterschied zu der vorhergehenden Ausführungsform ist damit die Luftleitlamelle an ihren Enden unterschiedlich an dem Gehäuse beziehungsweise der jeweiligen Dekorlamelle befestigt. Dies kann aus Kostengründen vorteilhaft sein. Je nach Ausbildung der Luftausströmeranordnung und deren Randbedingungen, kann eine unterschiedliche Lagerung der Luftleitlamelle auch Vorteile bei der Ausnutzung der vorhandenen Bauraums haben.

Das erfindungsgemäße Verfahren zum Herstellen einer Luftausströmeranordnung mit den Merkmalen des Anspruchs 10 zeichnet sich dadurch aus, dass die Luftleitlamelle mit dem Drehbolzen radial in die Lageraufnahme eingeführt wird, und dass anschließend die Dekorlamelle mit der Luftleitlamelle an dem Gehäuse derart angeordnet wird, dass der Lagervorsprung des Gehäuses in die Lageraufnahme hinein ragt, und zusammen mit der Lageraufnahme ein Radiallager, insbesondere Drehlager, für den Drehbolzen bildet.

Es ergeben sich hierdurch die bereits genannten Vorteile. Das erfindungsgemäße Verfahren zum Herstellen einer Luftausströmeranordnung mit den Merkmalen des Anspruchs 11 zeichnet sich dadurch aus, dass die Luftleitlamelle mit dem Drehbolzen auf dem Lagervorsprung des Gehäuses platziert und anschließend die Dekorlamelle an dem Gehäuse derart angeordnet wird, dass der Lagervorsprung des Gehäuses mit dem Drehbolzen in die Lageraufnahme der Dekorlamelle eingeführt wird und dort zusammen mit der Lageraufnahme ein Radiallager für den Drehbolzen bildet. Hierdurch wird die Montagereihenfolge geändert, im Ergebnis jedoch die gleiche Luftausströmeranordnung hergestellt. Um die zuletzt genannte Montagereihenfolge zu erleichtern, weist der Lagervorsprung des Gehäuses bevorzugt eine an den Drehbolzen angepasste Vertiefung, insbesondere eine an den Drehbolzen angepasste Krümmung, in seiner Anlagefläche auf, welche den Drehbolzen der Luftleitlamelle auf dem Lagervorsprung ausrichtet und bei der Montage hält. Vorzugsweise erstreckt sich dazu die Krümmung der Anlagefläche des Lagervorsprungs über mindestens ein Viertel, insbesondere über mindestens ein Drittel, des Kreisumfangs des Drehbolzens.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: eine vorteilhafte Luftausströmeranordnung in einer perspektivischen Draufsicht,
- Figur 2: die vorteilhafte Luftausströmeranordnung aus Figur 1 in einer Rückansicht und
- Figuren 3A bis 3C: einen Montagevorgang der Luftausströmeranordnung in mehreren Schritten, jeweils in einer Querschnittsdarstellung.

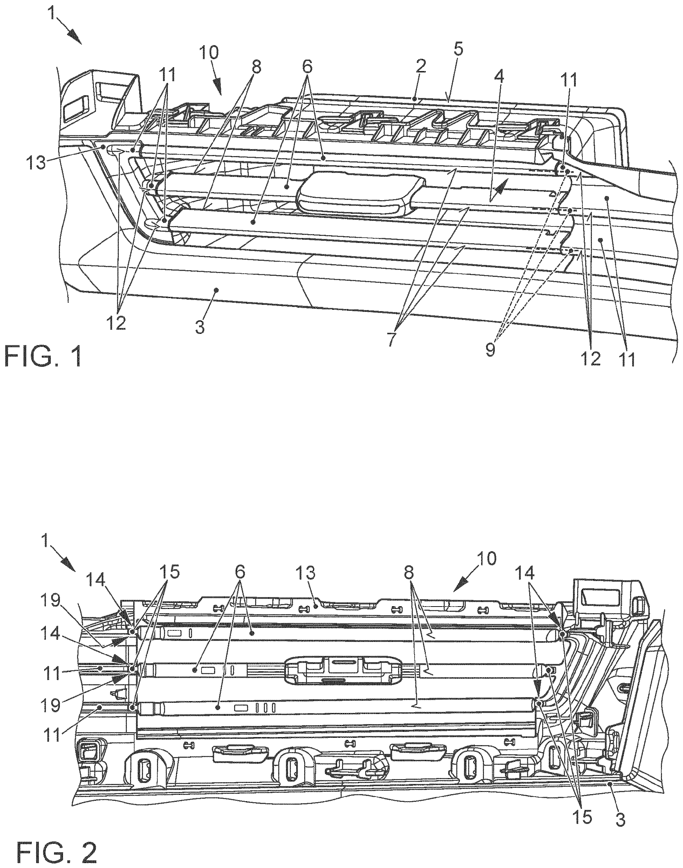

Figur 1 zeigt in einer perspektivischen Draufsicht eine vorteilhafte Luftausströmeranordnung 1 für ein hier nicht näher dargestelltes Kraftfahrzeug. Die Luftausströmeranordnung 1 weist ein Gehäuse 2 auf, das beispielsweise an einem Armaturenbrett 3 des Kraftfahrzeugs befestigt ist. Das Gehäuse 2 bildet einen sich durch das Gehäuse 2 hindurch erstreckenden Luftkanal 4 aus, der auf einer Rückseite 5 des Gehäuses mit einem Klimatisierungs- und/oder Belüftungssystem des Kraftfahrzeugs verbunden oder verbindbar ist, sodass durch den Luftkanal 4 insbesondere klimatisierte Frischluft in den Fahrzeuginnenraum des Kraftfahrzeugs strömen kann. Dem Luftkanal 4 sind vorliegend außerdem drei Luftleitlamellen 6 zugeordnet. Die Luftleitlamellen erstrecken sich parallel zueinander quer durch den Luftkanal 4. Die Luftleitlamellen 6 sind dabei an einem dem Innenraum zugewandten Ende des Luftkanals 4 angeordnet. Die Luftleitlamellen 6 weisen an ihrem dem Innenraum zugewandten Ende jeweils eine Abströmkante 7 und an ihrem von dem Innenraum und insbesondere dem Luftkanal 4 zugewandten Ende eine Anströmkante 8 auf. Die Luftleitlamellen 6 weisen insbesondere ein flügelartiges Querschnittsprofil auf und sind mit ihrer jeweiligen Anströmkante 8 um eine der Abströmkante 7 zugeordnete Drehachse 9 verschwenkbar gelagert, um einen Luftstrom, der aus dem Luftkanal 4 austritt, zu beeinflussen. Durch das Verschwenken der Luftleitlamellen ist insbesondere die Ausströmrichtung des Luftstroms beeinflussbar. Die Luftleitlamellen 6 sind dabei vorliegend bei bestimmungsgemäßer Montage zumindest im Wesentlichen horizontal erstreckend ausgerichtet, sodass durch ein Verschwenken der Luftleitlamellen 6 um die Drehachsen 9 ein Ausströmwinkel des ausströmenden Luftstroms in der Höhe einstellbar ist, sodass durch ein Verschwenken der Luftleitlamellen 6 der Luftstrom beispielsweise wahlweise einem Kopfbereich oder einem Rumpfbereich von Fahrzeuginsassen zugeführt werden kann.

Das Gehäuse 2 bildet zusammen mit den Luftleitlamellen 6 einen Luftausströmer 10. Bei herkömmlichen Luftausströmern 10 sind die Luftleitlamellen direkt an dem Gehäuse 2 verschwenkbar gelagert und werden zusammen mit dem Gehäuse 2 an dem Armaturenbrett 3 montiert.

Gemäß dem vorliegenden Ausführungsbeispiel wird die Luftausströmeranordnung 1 durch Dekorlamellen 11 ergänzt. Die Dekorlamellen 11 sind fest an dem Gehäuse 2 angeordnet und somit unbeweglich. Eine Sichtkante 12 der jeweiligen Dekorlamelle 11 ist dabei entsprechend der Abströmkante 7 der ihr zugeordneten Luftleitlamelle 6 ausgebildet und bündig zu dieser angeordnet, sodass sich optisch eine durchgehende Lamelle der Luftausströmeranordnung ergibt. Werden die Luftleitlamellen 6 verschwenkt, ist dies nur geringfügig in dem Gesamtbild erkennbar. Dies wird insbesondere vorliegend dadurch erreicht, dass die Luftleitlamellen 6 sowie die Dekorlamellen 11 an der Abströmkante 7 beziehungsweise der Sichtkante 12 die gleiche Krümmung beziehungsweise eine Krümmung mit dem gleichen Radius - im Querschnitt gesehen - aufweisen.

Figur 2 zeigt die Luftausströmeranordnung 1 in einer vereinfachten Rückansicht, bei welcher das Gehäuse 2 entfernt wurde. Die Dekorlamellen 11 sind einstückig mit einem Dekorelement 13 ausgebildet, das dem Fahrzeuginnenraum zugewandt ist und Bereiche des Armaturenbretts abdeckt. Die Dekorlamellen 11 weisen auf ihrer dem Luftkanal 4 beziehungsweise dem Gehäuse 2 zugewandten Seite jeweils eine radial offene Lageraufnahme 14 auf, die zur verschwenkbaren Lagerung der ihr jeweils zugeordneten Dekorlamelle 6 dient.

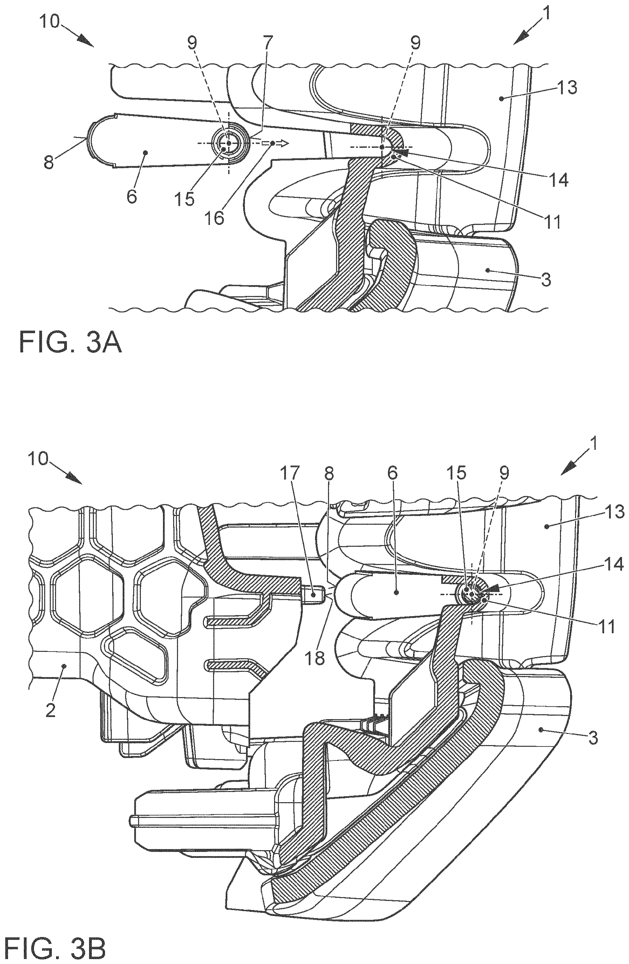

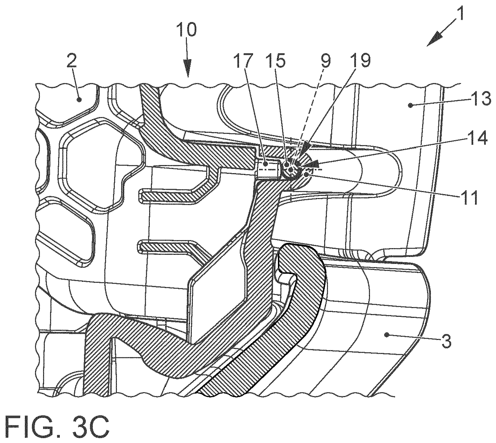

Figuren 3A, 3B und 3C zeigen jeweils in einer vereinfachten Querschnittsdarstellung der Luftausströmeranordnung 1 Montageschritte zur Herstellung der Luftausströmeranordnung 1. Figur 3A zeigt eine radial offene Lageraufnahme 14 einer der Dekorlamellen 11. Die radial offene Aufnahme 14 weist an ihrem Boden oder Grund eine kreisförmige Lagerkontur auf und ist insgesamt U- beziehungsweise V-förmig ausgebildet. Die jeweilige Luftleitlamelle 6 weist an ihrem der jeweiligen Dekorlamelle 11 zugewandten Ende jeweils einen Drehbolzen 15 auf, der einstückig mit der jeweiligen Luftleitlamelle 6 ausgebildet ist. Der Außendurchmesser des Drehbolzens ist dabei nur geringfügig kleiner als der Innendurchmesser des kreisförmigen Bodens der Lageraufnahme 14 oder maximal gleich groß.

Bei der Montage der Luftleitlamellen 6 werden diese mit ihrem jeweiligen Drehbolzen 15 in die Lageraufnahmen 14 der zugeordneten Dekorlamellen 11 radial eingeführt, wie in Figur 3A durch einen Pfeil 16 angezeigt und in Figur 2 erkennbar. Anschließend wird, wie in Figur 3B gezeigt, das Gehäuse 2 zugeführt. Das Gehäuse 2 weist dem Dekorelement 13 zugewandt für jede der Lageraufnahmen 14 jeweils einen Lagervorsprung 17 auf, der dazu ausgebildet ist, in die jeweilige Lageraufnahme 14 bereichsweise eingeschoben zu werden. Dazu ist der jeweilige Lagervorsprung 17 im Längsschnitt gesehen mit einer V- oder U-förmigen Außenkontur versehen, die zumindest im Wesentlichen der Innenkontur der Lageraufnahme 14 entspricht. An seinem freien Ende weist der jeweilige Lagervorsprung 17 bevorzugt eine konkave Anlagefläche 18 auf, deren Radius zumindest im Wesentlichen dem Radius des Drehbolzens 15 in der Lageraufnahme 14 entspricht. Der jeweilige Lagervorsprung 17 erstreckt sich dabei derart weit von dem Gehäuse 2 nach vorne, dass der Drehbolzen 15 bei an dem Dekorelement 13 montierten Gehäuse 2 durch den Lagervorsprung 17 einerseits und die Lageraufnahme 14 beziehungsweise die zugeordnete Dekorlamelle 11 andererseits drehbar mit nur geringem oder keinem radialen Spiel gelagert ist. Der Lagervorsprung 17 bildet somit zusammen mit der Lageraufnahme 14 ein Radiallager 19 für die jeweilige Luftleitlamelle 6, wie in Figur 3C gezeigt. Durch die Montage des Gehäuses 2 an dem Dekorelement 13 wird somit auf die Schwenklagerung der Luftleitlamellen 6 erzielt, wobei Lagervorsprung 17 und Lageraufnahme 14 derart ausgebildet sind, dass der Drehbolzen 15, der einstückig mit der jeweiligen Luftleitlamelle 6 ausgebildet ist, in dem jeweiligen Radiallager 19 drehbar um seine Längsmittelachse gehalten ist. Die Längsmittelachse bildet somit für jede der Luftleitlamellen 6 die zuvor bereits erwähnte jeweilige Drehachse 9, um welche die Luftleitlamellen 6 mit ihrer jeweiligen Anströmkante 8 verschwenkbar sind.

Während gemäß dem zuvor erläuterten Ausführungsbeispiel die jeweilige Luftleitlamelle 6 mit dem Drehbolzen 15 zuerst in der Lageraufnahme 14 angeordnet wird, ist gemäß einem weiteren Ausführungsbeispiel vorgesehen, dass die jeweilige Luftleitlamelle 6 mit dem Drehbolzen 15 zunächst an dem Lagervorsprung 17 des Gehäuses 2 platziert wird. Dazu weist der Lagervorsprung 17 eine insbesondere an die Kreisform des Drehbolzens 15 angepasste oder angepasst gekrümmte Anlagefläche 18 auf, wie zuvor beschrieben, die sich vorzugsweise über mindestens ein Viertel des Kreisumfangs des Drehbolzens 15, besonders bevorzugt über mindestens ein Drittel des Kreisumfangs des Drehbolzens 15, erstreckt, sodass der Drehbolzen 15 auf dem Lagervorsprung 17 sicher zur Vormontage platzierbar ist. In diesem Fall wird erst anschließend das Dekorelement 13 derart an dem Gehäuse 2 angeordnet, dass der Drehbolzen 15 sowie der Lagervorsprung 17 in die zugehörige Lageraufnahme 14 des Dekorelements 13 eingeführt werden, um dort das Radiallager 19 für den Drehbolzen 15 zu bilden.

Gemäß einem alternativen, hier nicht dargestellten, Ausführungsbeispiel, wird der Drehbolzen 15 der jeweiligen Luftleitlamelle 6 zwischen dem Lagervorsprung 17 und der Lageraufnahme beziehungsweise der jeweiligen Dekorlamelle 11 verspannt beziehungsweise verklemmt, und ist drehbar in oder an der jeweiligen Luftleitlamelle 6 gehalten, sodass die Drehbewegung durch die verdrehbare Lagerung des Drehbolzens an der Luftleitlamelle 6 ermöglicht ist.

Das gezeigte Ausführungsbeispiel hat den Vorteil, dass zum einen die Luftausströmeranordnung 1 einfach und mit wenigen Schritten montierbar ist, und dass zum anderen die Luftleitlamellen 6 verliersicher an dem Gehäuse 2 und dem Dekorelement 13 gehalten sind und mit einfachen Mitteln hergestellt und montiert werden können.

### Bezugszeichenliste

- 1: Luftausströmeranordnung
- 2: Gehäuse
- 3: Armaturenbrett
- 4: Luftkanal
- 5: Rückseite
- 6: Luftleitlamelle
- 7: Abströmkante
- 8: Anströmkante
- 9: Drehachse
- 10: Luftausströmer
- 11: Dekorlamelle
- 12: Sichtkante
- 13: Dekorelement
- 14: Lageraufnahme
- 15: Drehbolzen
- 16: Pfeil
- 17: Lagervorsprung
- 18: Anlagefläche
- 19: Radiallager

## Patentansprüche

1. Luftausströmeranordnung (1), insbesondere für ein Kraftfahrzeug, mit einem Luftausströmer (10), der ein einen Luftkanal (4) aufweisendes Gehäuse (2) und mindestens eine dem Luftkanal (4) zugeordnete Luftleitlamelle (6) mit einer Abströmkante (7) und einer Anströmkante (8) aufweist, wobei die Luftleitlamelle (6) mit ihrer Anströmkante (8) um eine der Abströmkante (7) zugeordnete Drehachse (9) verschwenkbar gelagert ist, und mit einer Dekoreinrichtung, die mindestens eine feststehende Dekorlamelle (11) mit einer sich in Verlängerung der Abströmkante (7) der Luftleitlamelle (6) erstreckenden Sichtkante (12) aufweist,
wobei die Luftleitlamelle (6) durch einen Drehbolzen (15) an der Dekorlamelle (11) um die Drehachse (9) verschwenkbar gelagert ist, **dadurch gekennzeichnet, dass** die Dekorlamelle (11) eine radial offene Lageraufnahme (14) für den Drehbolzen (15) aufweist, und dass das Gehäuse (2) einen Lagervorsprung (17) aufweist, der im montierten Zustand der Dekorlamelle (11) an dem Gehäuse (2) in die Lageraufnahme (14) hinein ragt, um zusammen mit der Lageraufnahme (14) ein Radiallager (19), insbesondere Drehlager, für den Drehbolzen (15) zu bilden.

2. Luftausströmeranordnung (1) nach dem vorhergehenden Anspruch, **dadurch gekennzeichnet, dass** der Lagervorsprung (17) derart ausgebildet ist, dass der Drehbolzen (15) in dem Radiallager (19) radial spielfrei oder zumindest im Wesentlichen radial spielfrei gehalten ist.

3. Luftausströmeranordnung (1) nach einem der vorhergehenden Ansprüche, **dadurch gekennzeichnet, dass** der Drehbolzen (15) fest an der Luftleitlamelle (6) angeordnet ist.

4. Luftausströmeranordnung (1) nach einem der vorhergehenden Ansprüche, **dadurch gekennzeichnet, dass** der Drehbolzen (15) einstückig mit der Luftleitlamelle (6) ausgebildet ist.

5. Luftausströmeranordnung (1) nach Anspruch 1 oder 2, **dadurch gekennzeichnet, dass** der Drehbolzen (15) um die Drehachse (9) drehbar an der Luftleitlamelle (6) gelagert ist.

6. Luftausströmeranordnung (1) nach einem der vorhergehenden Ansprüche, **dadurch gekennzeichnet, dass** der Lagervorsprung (17) eine gekrümmte Anlagefläche (18) zur Drehlagerung des Drehbolzens (15) aufweist.

7. Luftausströmeranordnung (1) nach einem der vorhergehenden Ansprüche, **dadurch gekennzeichnet, dass** auf dem von der Dekorlamelle (11) abgewandten Ende der Luftleitlamelle (6) eine weitere Dekorlamelle (11) an dem Gehäuse (2) in Längserstreckung der Luftleitlamelle (6) angeordnet ist.

8. Luftausströmeranordnung (1) nach Anspruch 7, **dadurch gekennzeichnet, dass** die Luftleitlamelle (6) an ihrem der weiteren Dekorlamelle (11) zugeordneten Ende einen weiteren Drehbolzen (15) aufweist.

9. Luftausströmeranordnung (1) nach Anspruch 8, **dadurch gekennzeichnet, dass** die weitere Dekorlamelle (11) eine weitere radial offene Lageraufnahme (14) für den weiteren Drehbolzen (15) aufweist, und dass das Gehäuse (2) einen weiteren Lagervorsprung (17) aufweist, der im montierten Zustand der weiteren Dekorlamelle (11) an dem Gehäuse (2) in die weitere radial offene Lageraufnahme (14) hinein ragt und zusammen mit der weiteren radial offenen Lageraufnahme (14) ein weiteres Radiallager (19), insbesondere Drehlager, für den weiteren Drehbolzen (15) bildet.

10. Verfahren zum Herstellen einer Luftausströmeranordnung (1) gemäß einem der Ansprüche 1 bis 9, **dadurch gekennzeichnet, dass** die Luftleitlamelle (6) mit dem Drehbolzen (15) radial in die Lageraufnahme (14) der Dekorlamelle (11) eingeführt wird, und dass anschließend die Dekorlamelle (11) mit der Luftleitlamelle (6) derart an dem Gehäuse (2) angeordnet wird, dass der Lagervorsprung (17) des Gehäuses (2) in die Lageraufnahme (14) der Dekorlamelle (11) hinein ragt und zusammen mit der Lageraufnahme (14) ein Radiallager (19) für den Drehbolzen (15) bildet.

11. Verfahren zum Herstellen einer Luftausströmeranordnung (1) gemäß einem der Ansprüche 1 bis 9, **dadurch gekennzeichnet, dass** die Luftleitlamelle (6) mit dem Drehbolzen (15) auf dem Lagervorsprung (17) des Gehäuses (2) platziert wird, und dass anschließend die Dekorlamelle (11) derart an dem Gehäuse (2) angeordnet wird, dass der Lagervorsprung (17) des Gehäuses (2) mit dem darauf platzierten Drehbolzen (15) in die Lageraufnahme (14) der Dekorlamelle (11) eingeführt wird und dort zusammen mit der Lageraufnahme (14) ein Radiallager (19) für den Drehbolzen (15) bildet.

## Claims

1. An air outlet arrangement (1), in particular for a motor vehicle, comprising an air outlet (10), which has a housing (2) having an air duct (4) and at least one air guide blade (6) associated with the air duct (4) and having a trailing edge (7) and a leading edge (8), the air guide blade (6) being mounted such that its leading edge (8) is pivotable about an axis of rotation (9) associated with the trailing edge (7), and having a decorative device that has at least one stationary decorative lamella (11) with a visible edge (12) extending in an extension of the trailing edge (7) of the air guide blade (6), the air guide blade (6) being mounted on the decorative lamella (11) so as to be pivotable about the axis of rotation (9) by means of a pivot pin (15), **characterized in that** the decorative lamella (11) has a radially open bearing seat (14) for the pivot pin (15), and **in that** the housing (2) has a bearing projection (17) that in the mounted state of the decorative lamella (11) on the housing (2) projects in particular into the bearing seat (14) in order to form, together with the bearing seat (14), a radial bearing (19), in particular a pivot bearing, for the pivot pin (15).

2. The air outlet arrangement (1) according to the preceding claim, **characterized in that** the bearing projection (17) is designed such that the pivot pin (15) is held in the radial bearing (19) without radial play or at least substantially without radial play.

3. The air outlet arrangement (1) according to according to any of the preceding claims, **characterized in that** the pivot pin (15) is fixedly arranged on the air guide blade (6) .

4. The air outlet arrangement (1) according to according to any of the preceding claims, **characterized in that** the pivot pin (15) is formed integrally with the air guide blade (6).

5. The air outlet arrangement (1) according to claim 1 or 2, **characterized in that** the pivot pin (15) is mounted rotatably about the axis of rotation (9) on the air guide blade (6).

6. The air outlet arrangement (1) according to any of the preceding claims, **characterized in that** the bearing projection (17) has a curved contact surface (18) for pivot mounting of the pivot pin (15).

7. The air outlet arrangement (1) according to any of the preceding claims, **characterized in that** a further decorative lamella (11) is arranged on the housing (2) in the longitudinal extension of the air guide blade (6) on the end of the air guide blade (6) facing away from the decorative lamella (11).

8. The air outlet arrangement (1) according to claim 7, **characterized in that** the air guide blade (6) has a further pivot pin (15) at its end associated with the further decorative lamella (11).

9. The air outlet arrangement (1) according to claim 8, **characterized in that** the further decorative lamella (11) has a further radially open bearing seat (14) for the further pivot pin (15), and **in that** the housing (2) has a further bearing projection (17) that, in the mounted state of the further decorative lamella (11) on the housing (2), projects into the further radially open bearing seat (14) and, together with the further radially open bearing seat (14), forms a further radial bearing (19), in particular a pivot bearing, for the further pivot pin (15).

10. A method for producing an air outlet arrangement (1) according to any of claims 1 to 9, **characterized in that** the air guide blade (6) is inserted radially into the bearing seat (14) of the decorative lamella (11) with the pivot pin (15), and **in that** the decorative lamella (11) together with the air guide blade (6) is subsequently arranged on the housing (2) such that the bearing projection (17) of the housing (2) projects into the bearing seat (14) of the decorative lamella (11) and, together with the bearing seat (14), forms a radial bearing (19) for the pivot pin (15).

11. The method for producing an air outlet arrangement (1) according to any of claims 1 to 9, **characterized in that** the air guide blade (6) is placed with the pivot pin (15) on the bearing projection (17) of the housing (2), and **in that** the decorative lamella (11) is subsequently arranged on the housing (2) such that the bearing projection (17) of the housing (2), together with the pivot pin (15) placed thereon, is inserted into the bearing receptacle (14) of the decorative lamella (11) and forms there, together with the bearing seat (14), a radial bearing (19) for the pivot pin (15).

## Revendications

1. Agencement d'échappement d'air (1), en particulier pour un véhicule automobile, comprenant un diffuseur d'air (10), qui présente un boîtier (2) présentant un canal d'air (4) et au moins une lamelle de guidage d'air (6) associée au canal d'air (4) comprenant un bord de fuite (7) et un bord d'attaque (8), la lamelle de guidage d'air (6) étant montée pivotable avec son bord d'attaque (8) autour d'un axe de rotation (9) associé au bord de fuite (7), et comprenant une unité de décoration, qui présente au moins une lamelle de décoration (11) fixe comprenant un bord visible (12) s'étendant dans la prolongation du bord de fuite (7) de la lamelle de guidage d'air (6), la lamelle de guidage d'air (6) étant montée pivotable autour de l'axe de rotation (9) sur la lamelle de décoration (11) au moyen d'un pivot (15), **caractérisé en ce que** la lamelle de décoration (11) présente une logement de palier (14) ouvert radialement pour le pivot (15), et **en ce que** le boîtier (2) présente un bossage de palier (17), qui, à l'état monté de la lamelle de décoration (11) sur le boîtier (2), fait saillie dans le logement de palier (14), pour former ensemble avec le logement de palier (14) un palier radial (19), en particulier un palier pivotant, pour le pivot (15).

2. Agencement d'échappement d'air (1) selon la revendication précédente, **caractérisé en ce que** que le bossage de palier (17) est formé de telle façon que le pivot (15) est tenu radialement sans jeu ou au moins essentiellement radialement sans jeu dans le palier radial (19).

3. Agencement d'échappement d'air (1) selon l'une quelconque des revendications précédentes, **caractérisé en ce que** le pivot (15) est disposé de manière fixe sur la lamelle de guidage d'air (6).

4. Agencement de d'échappement d'air (1) selon l'une quelconque des revendications précédentes, **caractérisé en ce que** le pivot (15) est formé d'une pièce avec la lamelle de guidage d'air (6).

5. Agencement d'échappement d'air (1) selon la revendication 1 ou 2, **caractérisé en ce que** le pivot (15) est monté de manière rotative autour de l'axe de rotation (9) sur la lamelle de guidage d'air (6).

6. Agencement d'échappement d'air (1) selon l'une quelconque des revendications précédentes, **caractérisé en ce que** le bossage de palier (17) présente une surface d'appui (18) courbée pour le logement rotatif du pivot (15).

7. Agencement d'échappement d'air (1) selon l'une quelconque des revendications précédentes, **caractérisé en ce que**, sur l'extrémité de la lamelle de guidage d'air (6) opposée à la lamelle de décoration (11), une autre lamelle de décoration (11) est disposée sur le boîtier (2) dans la prolongation longitudinale de la lamelle de guidage d'air (6).

8. Agencement d'échappement d'air (1) selon la revendication 7, **caractérisé en ce que** la lamelle de guidage d'air (6) présente un autre pivot (15) à son extrémité associée à l'autre lamelle de décoration (11).

9. Agencement d'échappement d'air (1) selon la revendication 8, **caractérisé en ce que** l'autre lamelle de décoration (11) présente un autre logement de palier (14) ouvert radialement pour l'autre pivot (15), et **en ce que** le boîtier (2) présente un autre bossage de palier (17), qui, à l'état monté de l'autre lamelle de décoration (11) sur le boîtier (2), fait saillie dans l'autre logement de palier (14) ouvert radialement et forme ensemble avec l'autre logement de palier (14) ouvert radialement un autre palier radial (19), en particulier un palier pivotant, pour l'autre pivot (15).

10. Procédé de fabrication d'un agencement d'échappement d'air (1) selon l'une quelconque des revendications 1 à 9, **caractérisé en ce que** la lamelle de guidage d'air (6) est introduite ensemble avec le pivot (15) radialement dans le logement de palier (14) de la lamelle de décoration (11), et **en ce qu'**ensuite la lamelle de décoration (11) est disposée ensemble avec la lamelle de guidage d'air (6) sur le boîtier (2) de telle façon que le bossage de palier (17) du boîtier (2) fasse saillie dans le logement de palier (14) de la lamelle de décoration (11) et qu'il forme ensemble avec le logement de palier (14) un palier radial (19) pour le pivot (15).

11. Procédé de fabrication d'un agencement d'échappement d'air (1) selon l'une quelconque des revendications 1 à 9, **caractérisé en ce que** la lamelle de guidage d'air (6) est placée ensemble avec le pivot (15) sur le bossage de palier (17) du boîtier (2), et **en ce qu'**ensuite la lamelle de décoration (11) est disposée sur le boîtier (2) de telle façon que le bossage de palier (17) du boîtier (2) avec le pivot (15) placé sur lui soit introduit dans le logement de palier (14) de la lamelle de décoration (11) et qu'il forme là, ensemble avec le logement de palier (14), un palier radial (19) pour le pivot (15).
